# EUROPEAN PATENT APPLICATION

(11) **EP 0 823 990 A2**
(43) Date of publication of application: **18.02.1998**
(21) Application number: 97202512.6
(22) Date of filing: 13.08.1997
(51) Int. Cl.: A01J 25/06, A01J 25/11

(54) **Cheese-vat**

(30) Priority: 13.08.1996 NL 1003792
(71) Applicant: Scherjon Engineering en Machinebouw, 9257 WN Noordbergum (NL)
(72) Inventor: Scherjon, Hielke, 9257 WN Noordbergum (NL)

(57) **Abstract**

The invention refers to a machine, intended for the cutting and stirring of curd, with a closed round cheese-vat which has cutting and stirring devices and a whey curd outlet, which is attached to the bottom of the tray, and posed in such a way that the cutting and stirring devices during the transport of the whey don't have to be stopped. This whey-discharge is also there to transport the curd.

## Description

The invention refers to a machine, intended for the cutting and stirring of curd, with a closed round cheese-vat which has cutting and stirring devices and a whey curd outlet, which is attached to the bottom of the tray, and posed in such a way that the cutting and stirring devices during the transport of the whey don't have to be stopped. This whey-discharge is also there to transport the curd.
Such a structure is already known. With the known structures it is about a round or oval cheese-vat with an open top. This cheese-vat has a bridge, on which, by using a propulsion, the cutting devices are attached. To transport the whey, a whey-sieve is used. During the transport of whey, the cutting devices have to be stopped to ensure that the curd will settle and the whey occurs.
Thus is it known that a perforated plate is posed in the tray and the cheese-vat is canted a few degrees so, that a gradient occurs, and the whey can go because of the gravitation. The perforated plate stops the curd. If the whey is transported the whey-sieve is removed and the cutting-stirring devices are started again. This procedure is repeated a few times, until the curd has the right mixproportion with the whey and can be worked up.
Known cheese-vats like this has the disadvantage, that during the transport of whey out of the round cheese-vat, the cutting procedure has to be stopped to let the curd settle, to let the whey float. In this case, the problem occurs that the curd parts stick together, and the lumps occurred as a base for the eventually made cheese is not a good starting material, which delivers a cheese of less quality.
Besides that, the problem of cleaning the tray occurs, because it is not a closed tray, the tray has to be cleaned by hand.
Goal of the invention is a new cheese-vat and a whey-curd outlet to use in combination with that, so that a conclusive solution offered for both the problems described above. Therefore the cheese-vat is, according to the invention, a cylindrical cask with a conical bottom, where in the center the whey-discharge is. Further, the cutting and stirring-devices, which turn against each other, are attached in the tray so, that the whey can be transported without stopping the knives.
Besides, the whey is transported so, that the curd doesn't have to settle so that the whey will float. The invention will be described with the use of an example, showed in the enclosed figures of a cheese-vat according to the invention.

Figure 1 shows schematically a section of a cheese-vat and the whey-curd outlet according to the invention.
Figure 2 shows schematically a top-view of the cheese-vat, according to the invention and is there to clarify figure 1.
Figure 3 shows schematically the whey-curd discharge in three situations.

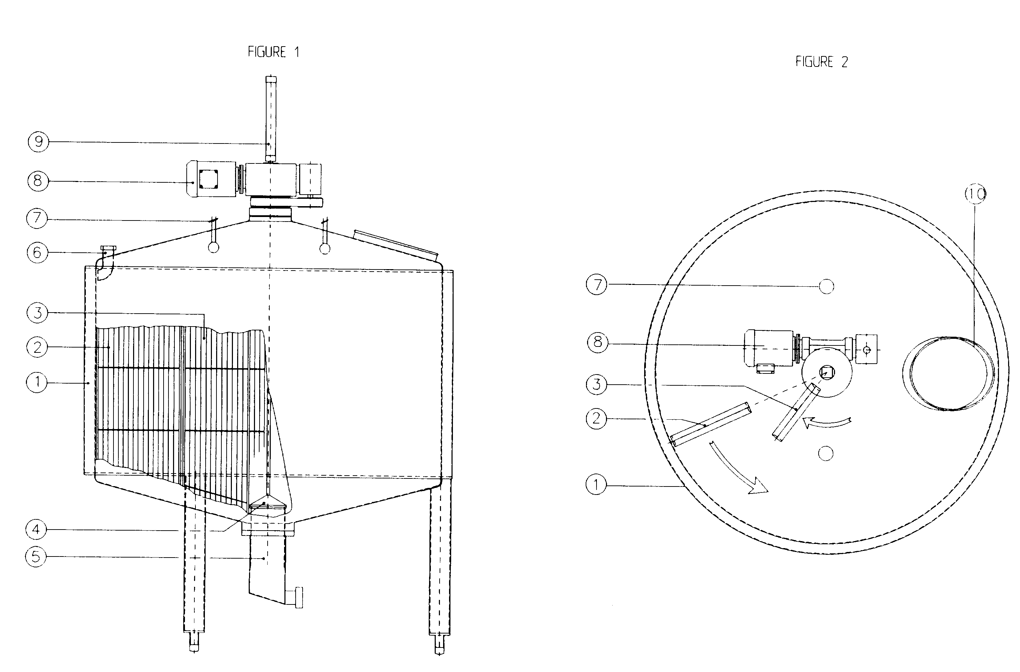

The action of the invention will be explained next with help of the figures 1, 2, and 3. The shown, in figure 1, cheese-vat in side-view, enclose an isolated outside jacket and is supported by a number of legs. The tank has a conical bottom. On top of the cheese-vat is the propulsion of the cutting and stirring-devices (2) and (3).
Further, figure 1 shows that the tank has spray-nozzles, with which the tank can be cleaned automatically. Figure 2 shows, that the stirring device, which is the closest to the heart of the tank, is operated directly, while the outermost device is operated by the reduction. The propulsion of the devices occurs by a reduction-motor, attached on top of the tray (8). (Electric drive with frequency-controller for different speeds.)
With the start of the motor the cutting knife, which is the closest to the axle will turn against the clock and the outermost cutting knife will turn with the clock. Both the cutting knifes are created so, that the whey can be transported without stopping the devices. This means, that the cutting-devices on the downside are equal to the tank, which brings on that in the whole tray there is cutting and stirring, so also in the part of the tray where it is slanting. Besides, on the stirring-cutting-devices which is the closest to the heart of the tank, there is a scraper attached, which scrapes beside the whey-discharge-device, so that this won't be stopped up with curd. The cutting-devices are attached to the tray so, that they don't have to be stopped during transporting the whey.

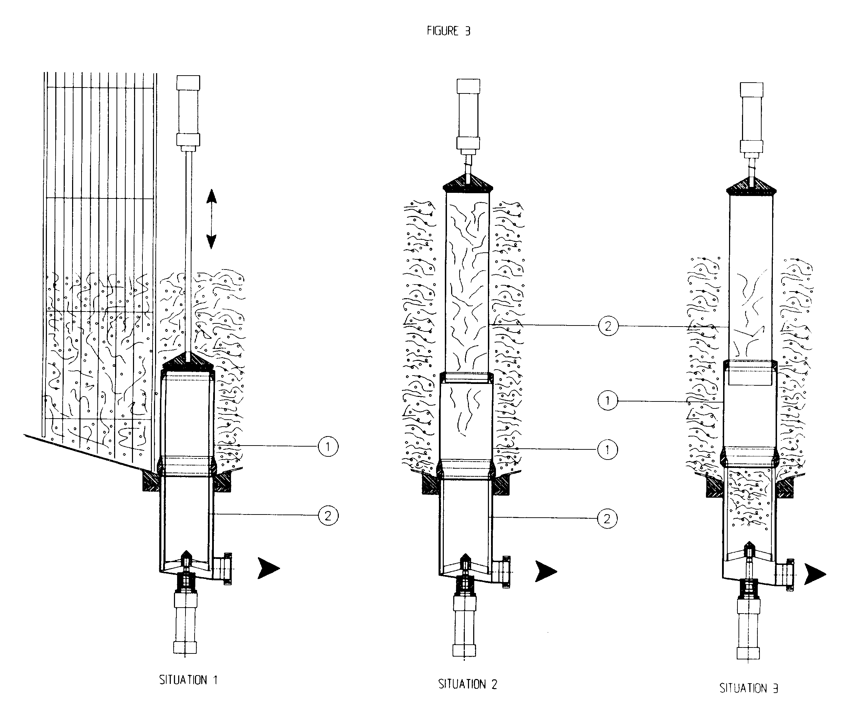

The in figure 3 shown whey-curd outlet, which is shown in figure 1 by number 5, is under the tank and consists of a pipe (1) with in that a perforated pipe (2), this works as a whey-sieve with closing-device.
If the milk is pumped in the tray through the inlet (6), the whey outlet is in closed position like situation 1. The milk present in the tank stirred now and cut, as soon as there is formed enough whey the innermost perforated pipe is pulled up, situation 2, so that the whey can be transported. During this transport the stirring devices keep on turning. You avoid lump forming then; because the innermost stirring device has a scraper you avoid the perforated pipe being stopped up. If the whey is pumped away, and the right level is achieved, then the whey-outlet closes again, situation 1. Now water is pumped again through the spray-nozzles. This procedure of whey-discharge and pumping water is repeated several times until the right proportion between whey and curd occurs.
When the curd has to be pumped away, the whey-sieve is pulled up by the cylinder, and the outermost pipe is pushed up by a cylinder, situation 3. Now there occurs space between the outermost pipe and the bottom of the cheese-vat, so that the whey-curd-mixture can be pumped away.

## Claims

1. Cask for preparing cheese, provided with means for the cutting of the curd which is available in the cask, and the stirring of the mixture, which is formed in the cask, out of the curd parts and liquid, and also a whey-discharge, with the distinguishing mark, that in the closed cylindrical tank with conical bottom, in which in the heart of that bottom there is a whey-discharge-device, enclosing an outermost pipe and an innermost perforated pipe; that last one is for the whey-discharge, and the stirring devices are attached so, that they don't have to be stopped during the whey-discharge.
